(19) Europäisches Patentamt

European Patent Office

Office européen des brevets

(11) **EP 2 891 899 A1**

(12) **EUROPEAN PATENT APPLICATION**

(43) Date of publication:
**08.07.2015 Bulletin 2015/28**

(51) Int Cl.:
**G01S 13/86** (2006.01)    **G01S 13/93** (2006.01)
**G01S 17/93** (2006.01)    **G01S 7/295** (2006.01)
**G01S 17/89** (2006.01)    **G01S 13/89** (2006.01)
**G01S 5/02** (2010.01)

(21) Application number: **14189287.7**

(22) Date of filing: **16.10.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **06.01.2014 US 201414148589**

(71) Applicant: **Honeywell International Inc.
Morristown, NJ 07962-2245 (US)**

(72) Inventor: **McKitterick, John B.
Morristown, NJ 07962-2245 (US)**

(74) Representative: **Houghton, Mark Phillip
Patent Outsourcing Limited
1 King Street
Bakewell, Derbyshire DE45 1DZ (GB)**

(54) **Mathematically combining remote sensing data with different resolution to create 3D maps**

(57)    Data from remote sensing systems with different beamwidths can be combined in a mathematically correct way. One example method includes receiving, by one or more processors, a first data set corresponding to detection signals from a first sensing system over a first frame, wherein the spatial region is mathematically broken into one or more cells. The method also includes receiving a second data set corresponding to detection signals from a second sensing system over a second frame, wherein the second sensing system has a resolution different than the first sensing system. For each cell, numbers of times the cell has been seen or not-seen is determined. A probability that the cell is occupied is determined based on the number of times the cell has been seen or not-seen. A value of occupancy of the cell is determined from the probability that the cell is occupied.

FIG. 1

EP 2 891 899 A1

**Description**

**STATEMENT REGARDING FEDERALLY SPONSORED RESEARCH OR DEVELOPMENT**

This invention was made with Government support under Government Contract No. HR0011-11-C-0138 awarded by Defense Advanced Research Projects Agency (DARPA). The Government may have certain rights in the invention.

**TECHNICAL FIELD**

The disclosure relates to ranging systems, such as radar and lidar systems used for three dimensional (3D) mapping.

**BACKGROUND**

Lidar (Light Detection and Ranging) and radar may both be used for 3D mapping. A 3D map may provide visual information about an environment determined from the lidar and radar.

**SUMMARY**

The disclosure describes techniques for combining data from remote sensing systems with different resolutions, such as radar and lidar systems, as well as devices and systems with combined ranging sensor systems. The data from the two different sensor systems can be combined based on a probability of occupancy of a cell determined based on two types of sensor data. In some examples, the techniques described herein provide a determination that will identify a probability threshold level of cell occupation that indicates the cell contains an object or terrain if a percentage the cell is occupied is above the threshold, and probably not dangerous if the percentage the cell is occupied is below the threshold. For example, the percent a cell is occupied may be determined from radar and other previously gathered data is determined. A number of times a lidar system has seen the cell is recorded. It is estimated how many times the cell would have to be not-seen in order to result in the probability of occupancy determined from the radar data. The number of times the cell is seen and not-seen is determined using a current frame of lidar data, and determined from a new probability distribution, resulting in a new probability of occupancy for the cell.

In one example, a method includes receiving, by one or more processors, a first data set corresponding to one or more detection signals from a first sensing system over a first frame, wherein the first frame corresponds to an observation of a spatial region by the first sensing system over a first time period, and wherein the spatial region is mathematically broken into one or more cells. For each cell, the method includes determining, by the one or more processors, from the first data set, a first number of times the cell has been seen or not-seen by the first sensing system. The method further includes receiving, by the one or more processors, a second set of data corresponding to one or more detection signals from a second sensing system over a second frame, wherein the second frame corresponds to an observation of the spatial region by the second sensing system over a second time period and wherein the second sensing system has a resolution different than the first sensing system. For each cell, the method includes determining, by the one or more processors, from the second data set, a second number of times the cell had been seen or not-seen by the second sensing system. The method also includes determining, by the one or more processors, a third number of times the cell has been seen or not-seen at least partially based on the first and the second number of times the cell had been seen or not-seen. The method further includes determining, by the one or more processors, for each cell, a probability that the cell is occupied at least partially based on the third number of times the cell has been seen or not-seen and determining, by the one or more processors and for each cell, a value of occupancy of the cell from the probability that the cell is occupied.

In another example, a system is provided. The system includes a first sensing system configured to determine a first data set corresponding to one or more received reflected signals having a first beamwidth over a first frame, wherein the first frame corresponds to an observation of a spatial region over a first time period by the lidar system, and wherein the spatial region is mathematically broken into one or more cells. The system further includes a second sensing system configured to determine a second data set corresponding to one or more received reflected signals having a second beamwidth over a second frame, wherein the second frame corresponds to an observation of the spatial region over a second time period and wherein the second beamwidth is larger than the first beamwidth. The system also includes one or more signal processors communicatively coupled to the lidar system and the radar system. The one or more signal processors are configured to determine, from the first data set for each cell, a first number of times the cell has been seen or not-seen by the first sensing system. The one or more signal processors are further configured to determine, from the second data set and for each cell, a second number of times the cell had been seen or not-seen by the second sensing system. The one or more signal processors are further configured to determine a third number of times the cell has been seen or not-seen at least partially based on the first and the second number of times the cell had been seen or not-seen and determine, for each cell, a probability that the cell is occupied at least partially based on the third number of times the cell has been seen or not-seen. The one or more signal processors are further configured to determine, for each cell, a value of occupancy of the cell from the probability that the cell is occupied.

In yet another example, a computer-readable storage medium is provided. The computer-readable storage medium having stored thereon instructions that, when executed, cause a processor to receive, by one or more processors, a first data set corresponding to one or more detection signals from a first sensing system over a first frame, wherein the first frame corresponds to an observation of a spatial region by the first sensing system over a first time period, and wherein the spatial region is mathematically broken into one or more cells. For each cell, the one or more processors determines, from the first data set, a first number of times the cell has been seen or not-seen by the first sensing system. The one or more processors receive a second set of data corresponding to one or more detection signals from a second sensing system over a second frame, wherein the second frame corresponds to an observation of the spatial region by the second sensing system over a second time period and wherein the second sensing system has a resolution different than the first sensing system. For each cell, the one or more processors determines from the second data set, a second number of times the cell had been seen or not-seen by the second sensing system. The one or more processors further determine a third number of times the cell has been seen or not-seen at least partially based on the first and the second number of times the cell had been seen or not-seen. The one or more processors also determine, for each cell, a probability that the cell is occupied at least partially based on the third number of times the cell has been seen or not-seen. The one or more processors also determine, for each cell, a value of occupancy of the cell from the probability that the cell is occupied.

The details of one or more examples of the disclosure are set forth in the accompanying drawings and the description below. Other features, objects, and advantages of the disclosure will be apparent from the description and drawings, and from the claims.

BRIEF DESCRIPTION OF DRAWINGS

FIG. 1 is a block diagram illustrating an example combined navigation system, in accordance with one or more aspects of the present disclosure.

FIG. 2A is a graph illustrating an example evidence grid plotted with lidar data, using only the part of the lidar data that corresponds to an actual detection, in accordance with one or more aspects of the present disclosure.

FIG. 2B is a graph illustrating the example evidence grid of FIG. 2A constructed by using not only the lidar detections (the cells that are "seen"), but also the inferences available by consideration of the lack of detections (the "not-seens"), in accordance with one or more aspects of the present disclosure.

FIG. 3A is a graph illustrating an example landing zone evidence grid plotted with lidar data without not-seens, in accordance with one or more aspects of the present disclosure.

FIG. 3B is a graph illustrating an example landing zone evidence grid using the data of FIG. 3A plotting with lidar data with not-seens, in accordance with one or more aspects of the present disclosure.

FIG. 4A is a diagram of an example evidence grid that illustrates detection volumes of two sensing systems with different resolutions, in accordance with one or more aspects of the present disclosure.

FIGS. 4B and 4C are graphs of an example evidence grid plotted with raw lidar data, in accordance with one or more aspects of the present disclosure.

FIG. 5 illustrates an example evidence grid containing a cable, in accordance with one or more aspects of the present disclosure.

FIGS. 6A and 6B are graphs illustrating example probability distribution functions, in accordance with one or more aspects of the present disclosure.

FIG. 7 is a graph illustrating one example of a probability distribution function plotted as a function of object height within a cell, in accordance with one or more aspects of the present disclosure.

FIG. 8 is a flowchart illustrating an example method of determining probability of occupancy of a cell using two types of sensor data, in accordance with one or more aspects of the present disclosure.

In accordance with common practice, the various described features are not drawn to scale and are drawn to emphasize features relevant to the present disclosure. Like reference characters denote like elements throughout the figures and text, although some variation may exist between the elements.

**DETAILED DESCRIPTION**

Techniques, devices, and systems described herein combine, in a mathematically correct way, data from remote sensing systems (e.g., a ranging sensor system, also referred to herein as a sensing system or sensor system) that are each configured to detect a range to a target, but have different resolutions than each other.. The combined data can be used to generate a three dimensional (3D) map for use in, for example, navigation. In accordance with some examples described herein, a processor of a system is configured to combine lidar and radar data from lidar and radar remote sensing systems, respectively, together in a mathematically correct way that takes into consideration the higher resolution of the lidar and the lower resolution of the radar. However, in other examples, other remote sensing systems may be used.

Three dimensional mapping of a spatial region may be used in a number of applications. For example, 3D mapping may be used to navigate a vehicle, such as an aerial vehicle or a land-based vehicle. Proper navigation of a vehicle may be based on the ability to determine a position of the vehicle and to determine an environment of the vehicle. The environment may include the terrain and any objects on the terrain and within the airspace surrounding the vehicle. In some situations, a pilot or driver cannot see the surrounding area and must rely on remote sensing technology to navigate the vehicle. As an example, 3D mapping may be useful for navigating a helicopter flying in a degraded visual environment. A degraded visual environment can be an environment in which it is difficult to visually determine what the environment is like, including the presence and location of obstacles. One example of a degraded visual environment is one in which a helicopter is landing on an area with dust or snow. The blades of the helicopter may kick up the dust or snow as the helicopter flies closer to the landing surface during a landing; the dust or snow may obstruct the pilot's view of the landing surface.

3D mapping may also be used to help a pilot of an aerial vehicle stay apprised of terrain obstacles or other objects when flying near the ground in order to help the pilot avoid the terrain obstacles. Other objects can include, for example, cables, which can be difficult for the pilot to see, even during daylight flight in good visibility conditions.

Techniques, devices, and systems described herein may be used to create a 3D map using available sensor systems, where the 3D map may be used to pilot a vehicle. The 3D maps described herein may help improve the situational awareness of a pilot, e.g., in a degraded visual environment, in the presence of terrain obstacles or other objects, or both.

In example systems and techniques described herein, two range detection systems, lidar and radar, are provided as an illustrative example. Furthermore, as described herein, the lidar and radar systems are described as being onboard an aerial vehicle, such as a helicopter. However, in other examples, one or more of the ranging systems may be a ranging system other than lidar and radar. Further, in other examples, data from more than two ranging systems may be mathematically combined according to the techniques described herein. Additionally, the ranging systems may be on a different type of vehicle besides an aerial vehicle, or may even be part of a stationary system.

Techniques and systems described herein may use an evidence grid to combine multiple measurements from the two or more sensors. An evidence grid is a two or three dimensional matrix of cells each of which is assigned a probability of occupancy which indicates the probability that the cell contains an object, such as a physical structure. A cell is a mathematical construct used to represent an area or volume of the real-world environment being sensed. The resulting matrix of cells whose probability of occupancy is above a threshold level serves as a representation of the real-world environment that the radar and lidar systems have sensed.

The techniques and systems described herein use data from two remote sensing systems that may be onboard an aerial vehicle, such as a helicopter, a radar system and a lidar system, and combine the data to create a 3D map that a pilot can use to navigate the aerial vehicle. The more sensors that are used, as well as the more a priori data that is available, the more accurate the 3D map may be. 3D mapping systems that use techniques described herein therefore will have improved accuracy over those systems that use only one remote sensing system.

Also, the faster but lower resolution radar may be able to detect a small object, such as a cable, but not be able to locate it with high resolution, while the slower but higher resolution lidar may not be able to detect it, but would accurately locate it if the lidar did detect it. However, it may be impractical to scan an entire terrain with a lidar system. Therefore, techniques and systems described herein mathematically combine lidar and radar data in order to retain the advantages of each system. Further, the techniques and systems described herein do not treat radar as having zero beamwidth as other systems may do.

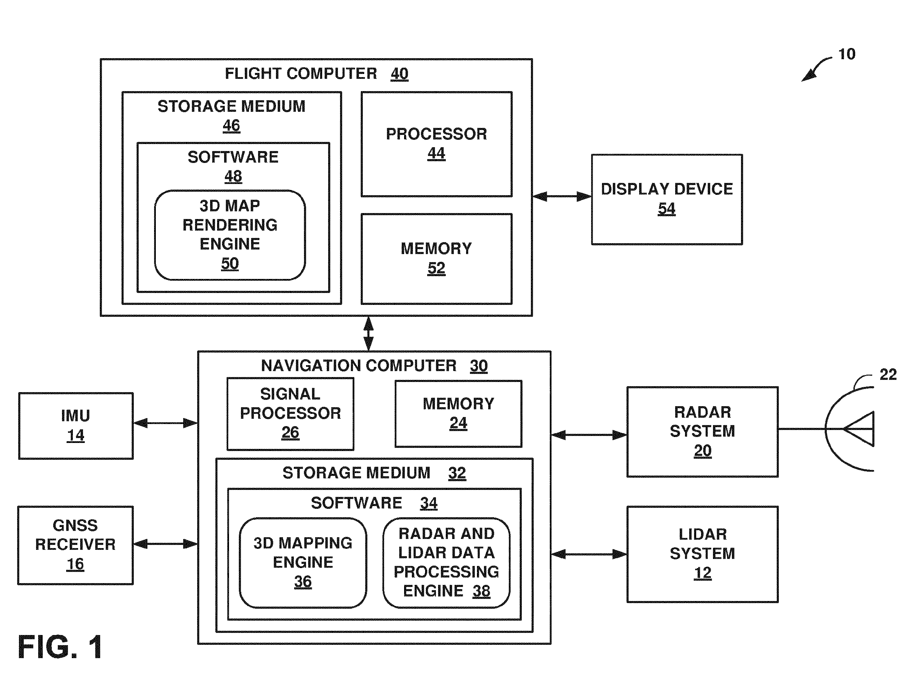

FIG. 1 is a block diagram illustrating an example combined navigation system 10, in accordance with one or more aspects of the present disclosure. As illustrated in FIG. 1, combined navigation system 10 may be a navigation system configured to operate onboard an aerial vehicle, such as a commercial airliner, helicopter, or an unpiloted aerial vehicle. In other examples, portions of navigation system 10 may be remotely located from the aerial vehicle, such at a ground control station. Combined navigation system 10 is configured to mathematically combine data from a lidar system 12 and data from a radar system 20 to create a more accurate 3D map than each system alone may achieve.

Combined navigation system 10 includes a navigation computer 30 and a flight computer 40. Navigation computer 30 performs analysis on data received from instruments in the combined navigation system 10, such as from one or more of lidar system 12, radar system 20, an internal measurement unit (IMU) 14, and a global navigation satellite system (GNSS) receiver 16. Using this data, navigation computer 30 determines the location and surroundings of the aerial vehicle carrying combined navigation system 10. Flight computer 40 receives data relating to the location and surroundings of the aerial vehicle from navigation computer 30 and renders data that may be output in a format useful in interpreting the location and surroundings, such as a visual 3D map.

In some examples, combined navigation system 10 does not include flight computer 40, and navigation computer 30 provides the location and surroundings data to an external device that may render an appropriate output (such as, for example, a computer in a land-based control unit for unpiloted vehicles). In other examples, combined navigation system 10 does not include any devices or functionality for signal processing, and instead provides sensory data to an external device, not onboard the vehicle) for processing.

Lidar system 12 remotely senses distances to a target (such as an object or terrain) by illuminating a target with a laser and analyzing the reflected light. Lidar system 12 includes any devices and components necessary to use lidar. Lidar system 12 scans one or more cells for objects and provides data (referred to herein as "lidar data" and also as "lidar enroute data") related to the distance of one or more objects and its position within the cell to navigation computer 30. In some examples, a cell is a two or three dimensional section of space wherein ranges are measured to objects within the two dimensional area. In other words, a cell is like a window in which distances from the sensor to objects within the window are measured. Lidar system 12 has a very narrow beamwidth because it uses a laser, resulting in measurements with very high resolution, particularly in the cross-range dimensions. Furthermore, because lidar system 12 has such a narrow beamwidth, it obtains data slower than radar system 20 in the sense that it would take a longer time to scan an entire cell than a radar system, which has a wider beamwidth. Various examples of lidar system 12 may use one or more lasers, various configurations of the one or more lasers, and lasers with different frequencies. Lidar system 12 may also be used to determine other properties besides distance of an object, such as speed, trajectory, altitude, or the like.

Radar system 20 remotely senses distances to a target by radiating the target with radio waves and analyzing the reflected signal. Radar system 20 scans one or more cells for objects and provides data (referred to herein as "radar data" and "radar enroute data") related to the distance of one or more objects and its position within the cell to navigation computer 30. That is, radar system 20 provides radar data, which may include one or more of a range to one or more obstacles, an altitude, or first return terrain location data, to signal processor 26 of navigation computer 30.

As shown in FIG. 1, radar system 20 is connected to one or more antennas 22. Radar system 20 may include one or more radar devices, such as, for example, a forward-looking radar or a first return tracking radar. A forward-looking radar may detect objects and terrain ahead of the aerial vehicle while a PTAN radar altimeter measures ground terrain features using a PTAN radar. Examples of radar system 20 that contain a forward-looking radar are operable to detect obstacles in the volume ahead of the aerial vehicle, such as cables or buildings in the aerial vehicle's flight path. Radar system 20 may include a millimeter wave (MMW) radar, for example.

Various examples of radar system 20 may use one or more antennas, various configurations of the one or more antennas, and different frequencies. One or more frequencies used in radar system 20 may be selected for a desired obstacle resolution and stealth. However, regardless of the radio frequency chosen, the resolution of radar system 20 will be less than that of lidar system 12. Radar system 20 has a very wide beamwidth relative to lidar system 12 because it uses radio waves, resulting in measurements with lower resolution. Furthermore, because radar system 20 has such a relatively wide beamwidth, it is faster in scanning an entire cell than lidar system 12. Radar system 20 may also be used to determine other properties besides distance of an object, such as speed, trajectory, altitude, or the like.

Inertial measurement unit (IMU) 14 may measure pitch and roll of combined navigation system 10 and provide data relating to the pitch and roll to navigation computer 30. Navigation computer 30 may use the pitch and roll data to determine and correct the position location of the vehicle including combined navigation system 10. In the example of FIG. 1, IMU 14 is onboard an aerial vehicle. IMU 14 generates attitude data for the aerial vehicle (that is, IMU 14 senses the orientation of the aerial vehicle with respect to the terrain). IMU 14 may, for example, include accelerometers configured to sense a linear change in rate (that is, acceleration) along a given axis and gyroscopes for sensing change in angular rate (that is, used to determine rotational velocity or angular position). In some examples, IMU 14 provides position information at an approximately uniform rate to 3D mapping engine 36 implemented by signal processor 26 so that the rendered images of the 3D map presented by flight computer 40 on display device 54 appear to move smoothly on display device 54.

In the example shown in FIG. 1, combined navigation system 10 includes a global satellite navigation system (GNSS) receiver 16. In some examples, GNSS receiver 16 may be a global positioning system (GPS) receiver. GNSS receiver 16 determines the position of combined navigation system 10 when the satellite network is available. In GNSS-denied conditions, GNSS receiver 16 is unable to provide the position of combined navigation system 10, so system 10 may use other means of determining the precise location of system 10. In other examples, combined navigation system 10 does not include GNSS receiver 16.

Navigation computer 30 includes a signal processor 26, a memory 24, and a storage medium 32. Signal processor 26 implements a radar and lidar data processing engine 38 and a 3D mapping engine 36. In the example shown in FIG. 1, radar and lidar data processing engine 38 and 3D mapping engine 36 are implemented in software 34 that signal processor 26 executes. Software 34 includes program instructions that are stored on a suitable storage device or medium 32. Radar and lidar data processing engine 38 interprets and processes the radar and lidar data. Radar and lidar data processing engine 38 may further use data from IMU 14 and GPS receiver 16 to determine a position of the aerial vehicle. 3D mapping engine 36 creates data that may be used to render a 3D map image from the radar and lidar data interpreted by radar and lidar data processing engine 38. 3D mapping engine 36 provides 3D map rendering engine 50 of flight computer 40 with data related to the combined and interpreted radar and lidar data.

Suitable storage devices or media 32 include, for example, forms of non-volatile memory, including by way of example, semiconductor memory devices (such as Erasable Programmable Read-Only Memory (EPROM), Electrically Erasable Programmable Read-Only Memory (EEPROM), and flash memory devices), magnetic disks (such as local hard disks and removable disks), and optical disks (such as Compact Disk - Read Only Memory (CD-ROM) disks). Moreover, the storage device or media 32 need not be local to combined navigation system 10. In some examples, a portion of software 34 executed by signal processor 26 and one or more data structures used by software 34 during execution are stored in memory 24. Memory 24 may be, in one implementation of such an example, any suitable form of random access memory (RAM) now known or later developed, such as dynamic random access memory (DRAM). In other examples, other types of memory are used. The components of navigation computer 30 are communicatively coupled to one another as needed using suitable interfaces and interconnects.

In one implementation of the example shown in FIG. 1, signal processor 26 is time-shared between radar system 20 and lidar system 12. Signal processor 26 may be one or more digital signal processors (DSPs), general purpose microprocessors, application specific integrated circuits (ASICs), field programmable logic arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, the functionality described herein may be provided within dedicated hardware and/or software modules configured for encoding and decoding, or incorporated in a combined codec. Also, the techniques could be fully implemented in one or more circuits or logic elements. For example, signal processor 26 schedules data processing so that, during a first portion of the schedule, signal processor 26 executes radar and lidar processing engine 38 to process radar data from radar system 20. During a second portion of the schedule, signal processor 26 executes radar and lidar processing engine 38 to process lidar data from lidar system 12. In other examples, signal processor 26 processes both lidar and radar data at approximately the same time. In further examples, navigation computer 30 includes two signal processors, each devoted to processing data from one of lidar system 12 and radar system 20.

A flight computer 40 combines flight data and terrain information from navigation computer 40 into image data and provides the image data to display device 54 for display. Flight computer 40 includes 3D map rendering engine 50. 3D map rendering engine 50 processes data from the 3D mapping engine to render a composite image of the combined lidar and radar data. 3D map rendering engine 50 provides the rendered combined image to display device 54. In some examples, 3D map rendering engine 50 provides 2D image data that represents a slice of 3D. The 3D image may include a 3D layout of the terrain as well as a set of obstacles (which might include no obstacles or one or more obstacles) ahead of or surrounding the aerial vehicle. 3D map rendering engine 50 performs image formation and processing, and generates the 3D map for output at display device 54. In some examples, 3D map rendering engine 50 further uses predetermined and stored terrain data, which may include a global mapping of the earth.

Flight computer 40 is used to implement 3D map rendering engine 50. In some examples, 3D map rendering engine 50 is implemented in software 48 that is executed by a suitable processor 44. Signal processor 44 may be one or more digital signal processors (DSPs), general purpose microprocessors, application specific integrated circuits (ASICs), field programmable logic arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, the functionality described herein may be provided within dedicated hardware and/or software modules configured for encoding and decoding, or incorporated in a combined codec. Also, the techniques could be fully implemented in one or more circuits or logic elements. Software 48 comprises program instructions that are stored on a suitable storage device or medium 46. Suitable storage devices or media 46 include, for example, forms of non-volatile memory, including by way of example, semiconductor memory devices (such as EPROM, EEPROM, and flash memory devices), magnetic disks (such as local hard disks and removable disks), and optical disks (such as CD-ROM disks). Moreover, storage medium 46 need not be local to combined navigation system 10. In some examples, a portion of software 48 executed by processor 44 and one or more data structures used by software 48 during execution are stored in a memory 52. Memory 52 comprises, in one implementation of such an example, any suitable form of random access memory (RAM) now known or later developed, such as dynamic random access memory (DRAM). In other examples, other types of memory are used. The components of flight computer 40 are communicatively coupled to one another as needed using suitable interfaces and interconnects.

Display device 54 receives data related to a 3D map from 3D map rendering engine 50. Display device 54 is configured to display a 3D map which includes a composite image of the lidar and radar data. A user, such as a pilot, may view the 3D map output. Display device 54 may be operable to display additional information as well, such as object tracking information, altitude, pitch, pressure, and the like. The display device 54 can be any device or group of devices for presenting visual information, such as one or more of a digital display, a liquid crystal display (LCD), plasma monitor, cathode ray tube (CRT), an LED display, or the like.

Combined navigation system 10 is configured to combine lidar and radar data in a mathematically correct way and generate a 3D map based on the combined data. Combined navigation system 10 implements techniques described herein to rapidly and accurately combine the lidar and radar data. Thus, combined navigation system 10 incorporates the advantages of both radar system 20 and lidar system 12 into a combined 3D map.

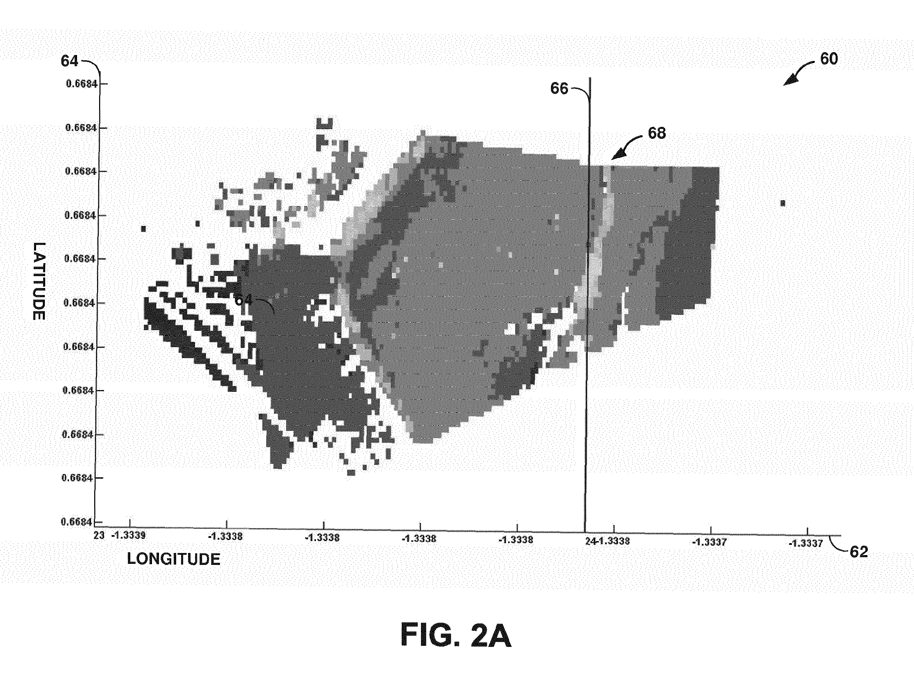

FIG. 2A is a graph illustrating an example evidence grid 60 plotted with lidar data, using only the part of the lidar data that corresponds to an actual detection, in accordance with one or more aspects of the present disclosure. Evidence grid 60 is a 3D grid plotted on a 2D graph, with an x-axis 62 representing longitude (e.g., east and west) and a y-axis 64 representing latitude (e.g., north and south). Radar and lidar data processing engine 38 may form evidence grid 60 from lidar data taken from a lidar system onboard an aerial vehicle (such as lidar system 12 of FIG. 1, for example). Therefore, evidence grid 60 is looking downward and the shade of the detected cells indicates a height, z, above the ground of a detected cell.

The cells represented in evidence grid 60 are cubic and have sides 4 meters (m) in length. These cells of 4 $m^3$ are within what is referred to herein as a lidar limit. The lidar limit is a cell size wherein it can be reasonably assumed that a detection by the lidar (e.g., the laser beam returned from being reflected back off an object) is a detection within only a single cell. Because the lidar beam is narrow, when lidar system 12 makes a detection, it can be assumed with little error, that the volume associated with the lidar detection is contained within exactly one cell. That is, the lidar limit is a case in which the beam of the lidar sensor is relatively small compared to the size of the cell. If lidar is considered as a virtual ray, which in this limit has zero beamwidth, lidar system 12 only samples one point or line in a cell, the cell being mathematically much larger than the lidar beamwidth. In contrast, if the size of the cell is relatively small (e.g., smaller than the beamwidth of the lidar), then the approximation that a detection is only within one cell would not be valid.

Generally, the lidar limit occurs when the sensor beamwidth is small compared to the cell size. Conversely, the radar limit occurs when the sensor beamwidth is large compared to the cell size. The radar limit is defined as when the beam is much wider than the cells, so that a detection may arise from an object in one or more of many cells. Because radar has a relatively large beamwidth (compared to lidar), for example, 1 to 3 degrees wide, and the cell sizes can be relatively small, it is not directly evident which cells within the detection volume are occupied when a radar detection of an object occurs. The lidar limit is typically valid for the lidar and the radar limit is typically valid for the radar, but if the cells were sized relatively large (e.g., larger than the radar beamwidth), then the radar could be considered to be within in the lidar limit.

This disclosure provides techniques to mathematically combine two types of sensor data having different limits. In the example described herein, two different sensors are available that are in different limits (e.g., radar system 20 and lidar system 12). Lidar system 12 and radar system 20 measure different things from the point of view of an evidence grid. In some examples described herein, radar system 20 samples the entire contents of one or more of the cells in evidence grid 60 at once because the radar beam detection volume is larger than the cell. Lidar system 12, on the other hand, only samples a portion of the cell. If a single cell is measured a thousand times with lidar system 12 at random points within the cell, what is measured is the fraction of the cell that is occupied. On the other hand, if the whole cell is measured as in the case with radar system 20, what is measured is whether the cell is occupied or not. Thus, the two sensors 12, 20 with different beam widths measure fundamentally different quantities and properties of a cell. That is, radar system 20 measures the probability that there is something, anything, in the cell. Lidar system 12, assuming many measurements, measures the fraction of the cell that is occupied. It can be difficult to combine data from radar system 20 and lidar system 12 because they are measuring different things.

Lidar system 12 is configured to make a single detection when the beam reflects off an object and is incident upon a sensor that is part of lidar system 12. Signal processor 26 considers a cell to be "seen" based on lidar detections and uses these detections to determine the probabilities of occupancy of the cell in evidence grid 60. Therefore, the plotted cells in evidence grid 60 all have probabilities of occupancy above some threshold percentage occupied level (in one example, the threshold percentage may be 0.5 %). When a detection of a cell is above the threshold level, the cell may be marked as "seen" (i.e., occupied) in the evidence grid. When the cell is not detected, or is detected below the threshold level, the cell may be marked as "not-seen" (i.e., unoccupied) in the evidence grid. In the example of FIG. 2A, evidence grid 60 is looking down at a field (a type of spatial region). A section of lighter cells in the area indicated by an arrow 68 marks a hedgerow of trees on one side of the field. Evidence grid 60 is one moment of a dynamically updating map updated by one or more of processors 26 and 44, which updates as the aerial vehicle moves above the ground. Vertical line 66 represents a boundary between two tiles. A tile is a mathematical construct of a fixed area of the ground, which signal processor 26 may use when combining multiple evidence grids of different time instances to make a dynamically updating 3D map.

Lidar system 12 only reports how far it is to the object that was hit. However, additional inferences may be made. For example, a laser beam that has traveled a distance before hitting an object can be inferred to have not hit anything along the distance between lidar system 12 and the target. Along the beam are many non-detections with one detection at the end. Therefore, it can be inferred that there is nothing along the path of the ray of the laser beam. When the laser beam passes through a cell without hitting an object is referred to the cell as being "not-seen" by the laser beam.

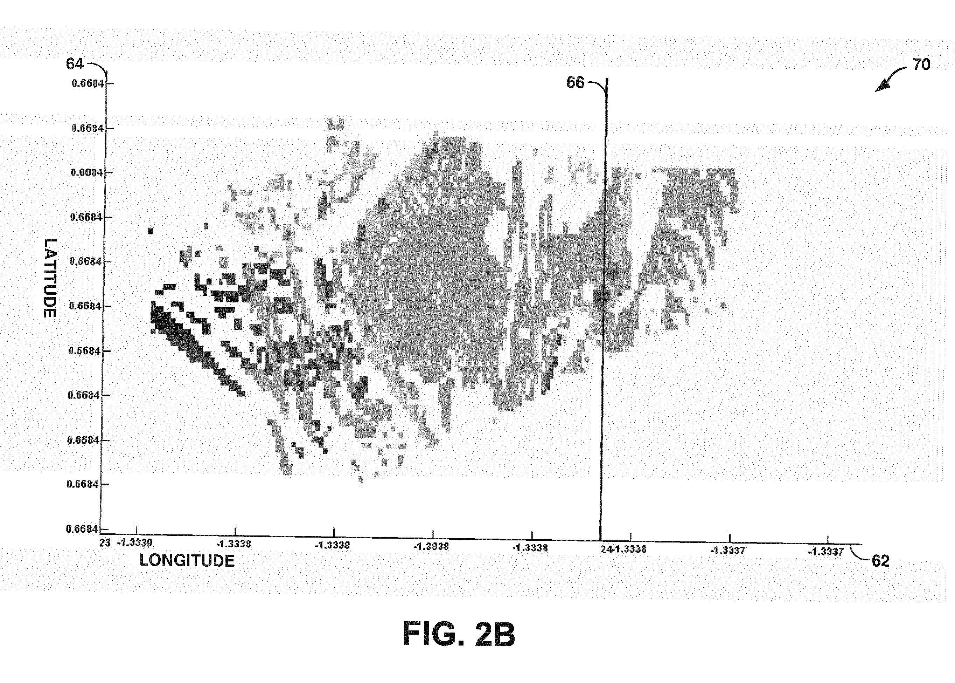

FIG. 2B is a graph illustrating the example evidence grid 70 of FIG. 2A constructed by using not only the lidar detections (the cells that are "seen"), but also the inferences available by consideration of the lack of detections (the "not-seens"), in accordance with one or more aspects of the present disclosure. Evidence grid 70 illustrates what may happen when the radar limit is applied to the lidar data. In the radar limit, the probability of occupancy of a cell is increased each time the cell is "seen", and decreased when the cell is "not-seen". Many cells become unoccupied when using the lidar not-seens with the radar limit, as can be seen from the many cells that have disappeared between evidence grid 60 and evidence grid 70. Thus, many cells that are shown in FIG. 2A as part of the ground plane are missing in FIG. 2B.The inference that there is nothing along the path of the laser until the final detection can be used to determine the probability that the cells are occupied or the percentage of a cell that is occupied. In FIG. 2A, it was plotted every time lidar system 12 made a detection. In FIG. 2B, every time the laser beam passed through a cell and did not detect anything, a not-seen is generated. As can be shown in FIG. 2B, when the data is not handled correctly according to techniques described herein, and instead the radar approach is applied, the ground gets eaten away in evidence grid 70. In other words, if radar statistics are applied to lidar data with a certain cell size, a lot of data may end up lost. Therefore, applying the appropriate calculations, as described below, results in a more accurate map.

The radar limit and the lidar limit refer to the limits when the size of the sensor detection volume is larger than a cell size or smaller than a cell size, respectively. Hence the determination of whether a sensor is operating in the radar limit or in the lidar limit depends not only on the physical properties of the sensor, particularly the beamwidth, but also the size of the cells in the evidence grid. The size of the cells of the evidence grid can vary depending on the requirements for the resolution of the evidence grid and the computational power available. Smaller cell sizes provide higher resolution in any resulting map, but may require considerably more computational resources. For helicopters, for example, there may be two distinct regimes of operations with different requirements on the evidence grid. During flights between two distant locations, a helicopter may be flying fast (for example, 100 knots or faster) and low to the ground. In this enroute phase, there may be no need for a high-resolution map of the ground. Hence, a relatively large cell size can be used in the enroute evidence grid. Conversely, when the helicopter is landing, obstacles as small as 1 ft$^3$ may need to be avoided by the helicopter, so a high resolution evidence grid, with small cell sizes, may be more usefule.

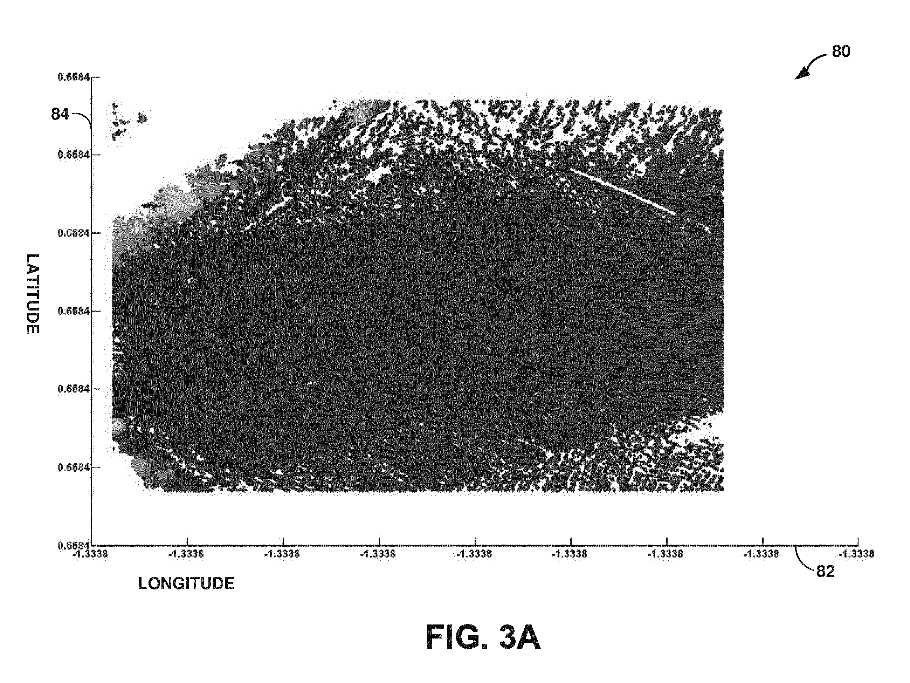

FIG. 3A is a graph illustrating an example landing zone evidence grid 80 plotted with lidar data without not-seens, in accordance with one or more aspects of the present disclosure. Evidence grid 80 has an x-axis 82 of longitude and a y-axis 84 of latitude. Evidence grid 80 shows a portion of the same data that is shown in FIG. 2A. However, the cell size of grid 80 in FIG. 3A is much smaller than that of grid 60 in FIG. 2A. The cell size for evidence grid 80 is $\frac{1}{4}$ m by $\frac{1}{4}$ m x $\frac{1}{8}$ m, suitable for depicting the small obstacles in a landing zone. In this example, this cell size close to the cell size that would put the lidar data into the radar limit. Because the beamwidth of lidar has some width, approximately one hundredth of a degree in some examples, a small enough cell size, such as would be appropriate for a landing zone evidence grid, would bring the lidar into the radar limit.

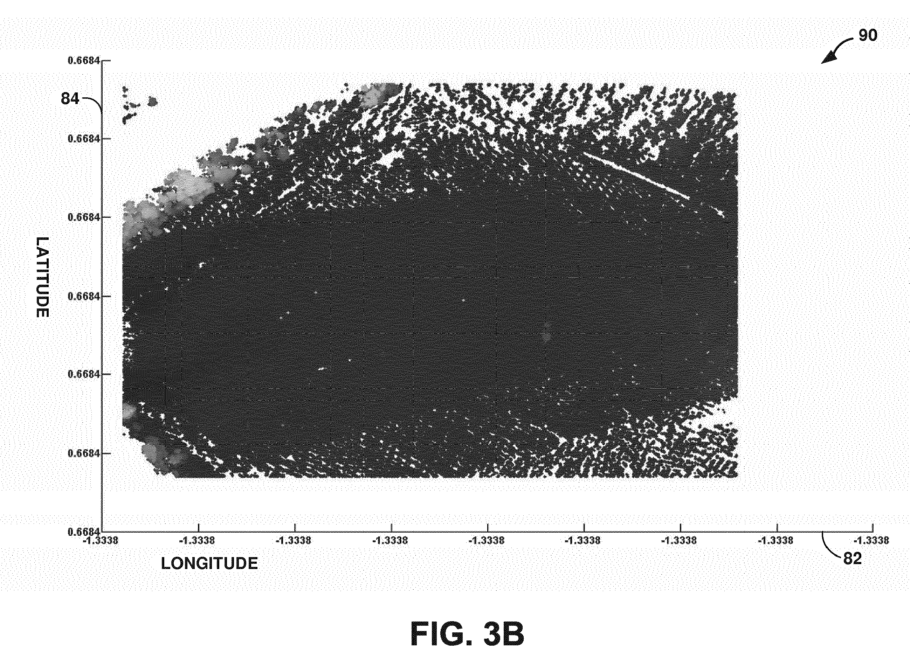

FIG. 3B is a graph illustrating an example landing zone evidence grid 90 using the data of FIG. 3A plotting with lidar data with not-seens, in accordance with one or more aspects of the present disclosure. Due to the smaller cell size, there are fewer missing cells between the seen and not-seen versions of the landing zone evidence grid 80 and 90, respectively, as there is between evidence grids 60 and 70. The ground plane is not disappearing as much as between seens and not-seens with a smaller cell size. Techniques described herein may help compensate for two problems that can be seen in FIGS. 2A-3B. First, the not-seens in the enroute evidence grid are incorrectly removing the ground plane. Second, the not-seens in the landing zone evidence grid are not removing noise spikes. Further, in some examples, an object that moves between the frames of data, such as a tractor in the field imaged in FIGS. 2A-3B, may not be fully erased as it moves using conventional algorithms.

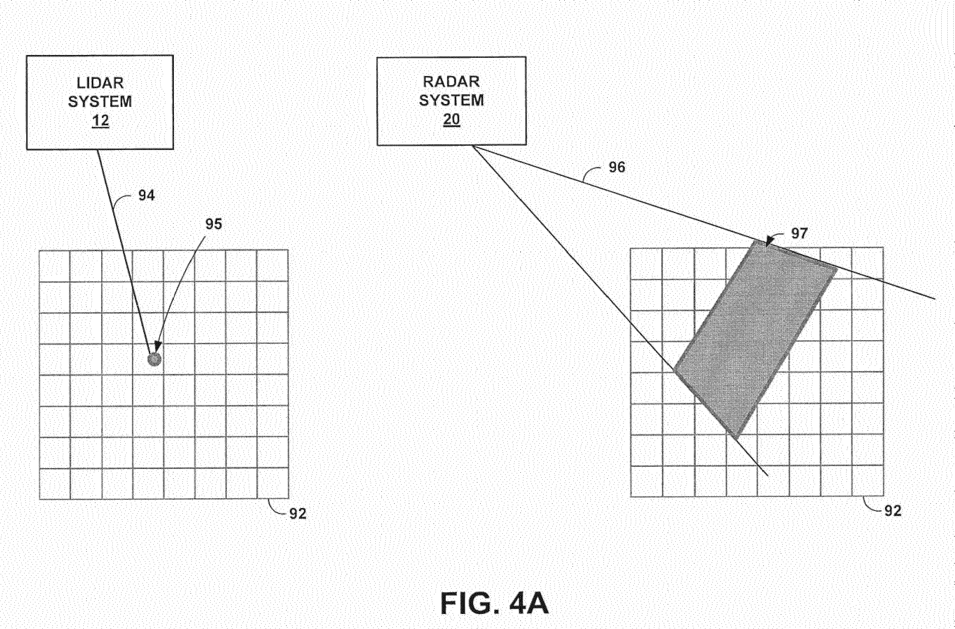

FIG. 4A is a diagram of an example evidence grid 92 that illustrates detection volumes of two sensing systems with different resolutions, in accordance with one or more aspects of the present disclosure. FIG. 4A illustrates the lidar and radar limit as described herein. Lidar system 12 emits laser beam 94 into a spatial region to which evidence grid 92 corresponds. Lidar system 12 has a detection region 95, which as is illustrated in FIG. 4A, is smaller than a cell size of the cells in evidence grid 92. Radar system 20 emits radar 96 into the spatial region to which evidence grid 92 corresponds and has a detection region 97. Detection region 97 is larger than a single cell of evidence grid 92. The size of the cells in evidence grid 92 sets the resolution of evidence grid 92. The smaller the cell size, the higher the resolution.

Thus, in the lidar limit, the size of the detection volume is small compared to the size of evidence grid 92 cell size. In contrast, in the radar limit, the size of evidence grid 92 cell is small compared to the detection volume. Note that the designations of the "Lidar" limit and the "Radar" limit are not intended to be applied exclusively to a lidar and a radar, respectively. These designations refer to typical applications of the sensor/evidence grid combination. However, in some examples, lidar is used with an evidence grid cell size of 1 mm or even smaller, in which case the "radar" limit is likely to apply. Similarly, another example may use radar and an evidence grid cell size of 100 m on a side, in which case the "lidar" limit might be appropriate.

Techniques described herein apply to sensor data that is both appropriate to the lidar limit and the radar limit. Furthermore, techniques described herein can combine all sensor data into a single evidence grid regardless of how many sensors contribute, without having to construct separate evidence grids for each type of sensor data.

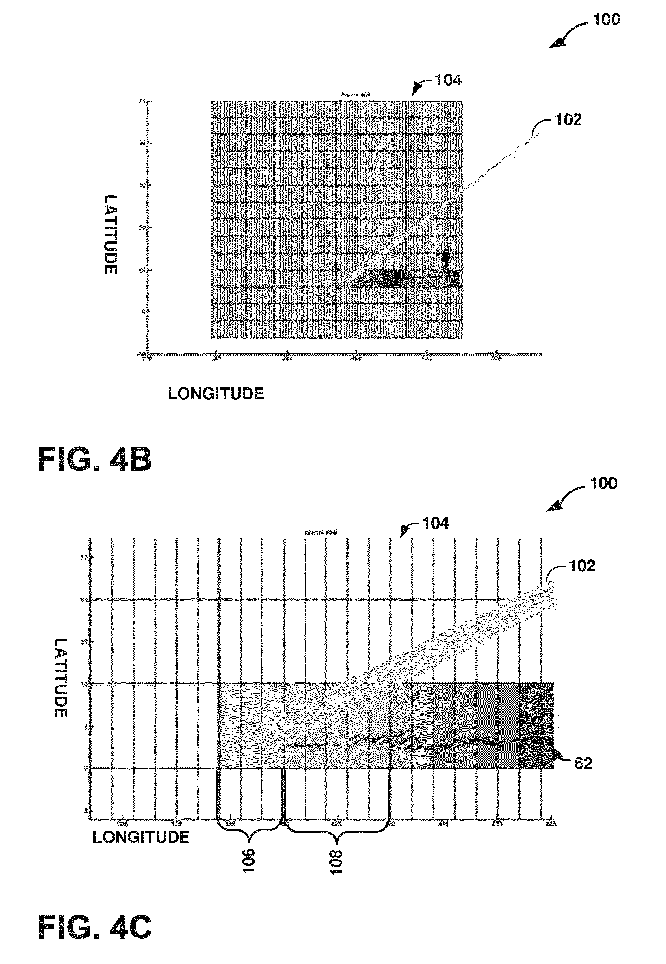

FIGS. 4B and 4C are graphs of an example evidence grid 100 plotted with raw lidar data for a particular frame, in accordance with one or more aspects of the present disclosure. In some examples, data is batched into frames of data in order to be operated on together. In some examples, data is batched into frames having the same time period but different spatial regions. In other examples, data is batched into frames from different time periods but of the same spatial region. FIG. 4B is a zoomed out version of evidence grid 100 plotted with raw lidar data, while FIG. 4C is a zoomed-in version of evidence grid 100. Evidence grid 100 includes a plurality of cells 104. The data in evidence grid 100 is limited to data from lidar beams 102 that have a detection in cells in an x-z plane (y is held constant in FIGS. 4B and 4C, as is shown by the colored cells having the same latitude). The shaded cells indicate a detection of a reflective object. Dots 62 shown in FIG. 4C indicate the location of the detections prior to and including this particular frame.

Cells 106 are the cells that are seen in this frame by lidar beams 102 transmitted by lidar system 12. Cells 108 are cells that were seen in a previous frame. In the frame shown in FIGS. 4B and 4C, lidar beams 102 pass through cells 108 that were seen in the previous frame. If radar statistics are used to interpret the lidar data, every time one of lidar beams 102 passes through cells 108, it generates a not-seen because it does not see anything in cells 108. Thus, cells 108 are marked as unoccupied when using radar statistics. Furthermore, in some examples, because lidar beams 102 can number into the thousands, it might be possible that signal processor 26 marks cells 106 in the evidence grid as empty when cells 106 have been looked at a hundred times and many have not resulted in a detection when operating under radar statistics (e.g., using the radar limit for the lidar data). However, as can be seen from the geometry in FIG. 4C, only a part of cells 106 are measured, not the entirety of cells 106.

An algorithm that may be used by a processor, e.g., of a navigation device, to interpret this lidar data can be referred to herein as a "radar statistics" algorithm. Generally, the radar statistics work in the following way. For every time a cell is sampled, the probability it is occupied increases. For every time the cell is not-seen (e.g., lidar beams 102 pass through without seeing), the probability the cell is occupied decreases.

A more specific example of how the radar statistics work is as follows. For each frame of data, the processor processes each detection. The processor marks as seen currently detected cells in this frame, as well as the cells that have been seen at least once in any previous frame. Next, the processor processes not-seens. The processor marks each cell that has not been seen as not-seen. Note this marking is binary: a cell is either not-seen or not not-seen. If a cell has been not-seen, and has not been seen in this frame, and has been seen at least once prior to this frame, then the processor marks the cell as not-seen and reduces the probability of occupancy of the cell appropriately. The processor does not count the number of times a cell has been not-seen. Further, the processor does not mark a cell that has been seen this frame as not-seen. Each time a cell has been seen is separately evaluated by the processor.

While the radar statistics algorithm is useful, it can fail with lidar data when used in an enroute evidence grid. As illustrated in FIG. 4C, lidar beams 102 from one frame frequently wipe out the occupied cells 108 from the previous frame. The radar statistics algorithm may also fail when the occupied part of a cell is only a small fraction of the whole volume of the cell. Lidar beams 102 sample different parts of the cell in different frames. For example, in one frame, a lidar beam 102 samples the ground in a cell, generating "seens," and in the next frame, the lidar beam 102 samples the spatial region above the ground in that cell, "generating not-seens."

One reason for the failure of the radar statistics algorithm with lidar data for the enroute evidence grid may be the size of the lidar detection volume versus the size of the cell. Because it is within the lidar limit, the volume of the cell is much larger than the detection volume of the sensor. The radar statistics algorithms can be implemented by a processor to determine the probability that the cells in the evidence grid are occupied (i.e., have "something in them"), but in the lidar limit, lidar system 12 does not directly measure whether the cells have "something in them." Rather, the collection of measurements in the lidar limit on a single cell indicates how much of the cell is occupied (i.e., the percentage of occupancy).

Reducing the cell size may ease some of the above stated problems. As the cell sizes get smaller, the radar limit is approached. With small enough cells, the radar limit will be reached even for lidar system 12. In that case, the radar statistics can be an appropriate algorithm to use with detections by lidar system 12. However, experiments show that the cell may need to be smaller not only in the z-direction, but also in the x- and y-direction too. Furthermore, for applications where very high resolution is not needed or is extremely difficult (e.g., for a helicopter flying at a hundred knots, or limited processing power and processing speed), small cells may be impractical for creating a dynamic map as the vehicle moves. In some applications, it may be unnecessary to know what the ground looks like at a tenth of a meter resolution. In addition, if radar data is also being generated, small cells in the enroute evidence grid may be undesirable for interpretation of the radar data by a processor.

Techniques described herein may configure processor 26 to create a single evidence grid that includes data generated from two sensing systems having different resolutions, such as lidar system 12 and radar system 20. As such, processor 26 does not build a separate evidence grid for data from lidar system 12 and another separate evidence grid for data from radar system 20.

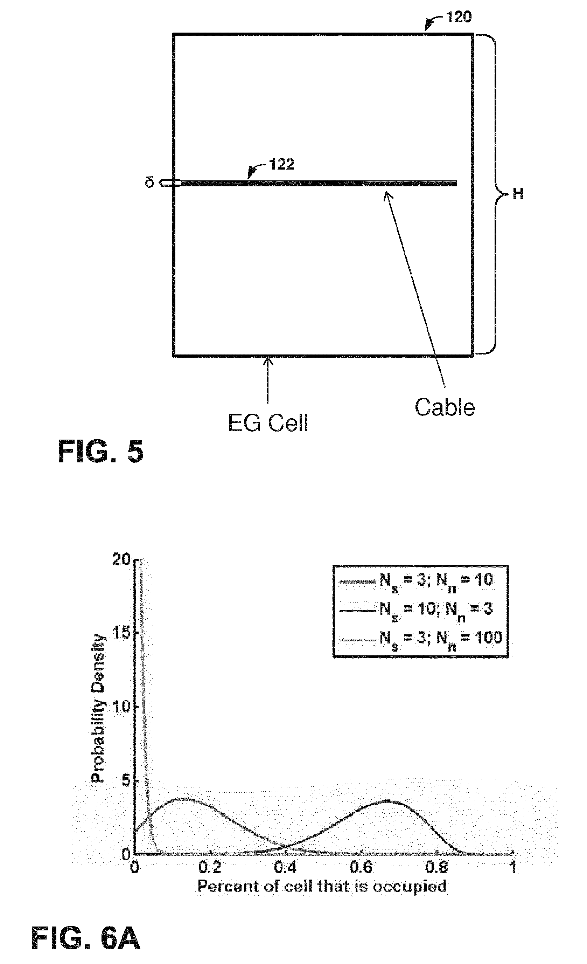

FIG. 5 illustrates an evidence grid cell 120 of a spatial region containing a cable 122, in accordance with one or more aspects of the present disclosure. Evidence grid 120 may be generated by a processor of FIG. 1, such as signal processor 26. Evidence grid cell 120 (also referred to herein as "cell 120") is an enroute cell having a height H that contains cable 122 having a diameter $\delta$. For illustrative purposes, consider the diameter of cable 122 to be 1% of the height of cell 120. If cell 120 is measured with an ideal laser beam (e.g., a laser beam having 0° beamwidth), then cable 122 would be detected 1% of the time. In contrast, radar system 20 would detect cable 122 100% of the time, unless radar system 20 also had a very narrow beamwidth. Note that having a non-zero beamwidth increases the chance that the lidar beam would intersect cable 122.

In examples of navigation systems with lidar system 12 but no radar system 20, combining lidar and radar data was not a concern; a solution would be to keep statistics on cell 120 in order to determine the percentage of the cell that is occupied. How many times a detection was received may be counted, and the number of detections may be divided by the total number of measurements made. If cell 120 is 1% occupied, a reasonable interpretation would be to consider cell 120 to contain cable 122 and mark the entire cell 120 as occupied so pilot doesn't fly near cell 120. However, this approach does not work for combining data from lidar system 12 and radar system 20.

Described herein is one solution for combining data from lidar system 12 and radar system 20. The equations discussed herein are just one possible way to derive a suitable mathematical combination of radar and lidar data. Other derivations and methods are contemplated within the scope of this description.

If in the lidar limit, lidar system 12 measures a cell N times and receives a detection M times, then the cell is most likely to be $\frac{M}{N}$ percent occupied. Processor 26, while implementing techniques described herein, is able to determine the probability of occupancy of a cell if it is $\frac{M}{N}$ % occupied. An estimate of the percentage that a cell is occupied is indicated by the ratio of the number of times that a cell has been seen, $N_s$, to the total number of times that the cell has been sampled, as shown in Equation 1 below. The number of times a cell has been not-seen is given as $N_n$.

$$ \text{estimate of percentage of cell occupied} = \frac{N_s}{N_s + N_n} \qquad (1) $$

Techniques, devices, and systems described herein keep track of the number of times a cell has been seen, $N_s$, and the number of times a cell has been not-seen, $N_n$. The probability that the cell is occupied (e.g., the cell "has something in it") is then set to a function of the seen/(total samples) ratio of Equation 1, with a value near 1 if the percentage of the cell that is occupied is above some value, and near 0 otherwise. The probability that the cell is occupied means it has something in it that a pilot may need to maneuver the vehicle around avoid. A processor incorporating the techniques described herein provides a calculation that will identify a probability threshold level of cell occupation that indicates the cell is occupied if its percentage is above the threshold, and probably not dangerous if the percentage the cell is occupied is below the threshold. Furthermore, the techniques described herein are able to fuse lidar data with the radar data, without having to add two or more additional memory locations for each enroute cell that may be otherwise required.

The techniques described herein take into account the parameter that even though the lidar laser has a very small beamwidth, it is not zero. The height of the lidar beam in the cell is given as h, while height of cell 120 is H. If the lidar beam height, h, is larger than the cell height, H, the lidar data is within in radar limit. If h goes to 0, the lidar data is within the mathematical limit of the lidar always detecting the correct percentage of cell occupancy. However, techniques described herein apply to the in-between, real-world situations where 0 < h < H.

In systems and techniques where only lidar data is used, a processor may keep track of the number of times a cell has been seen and not-seen. Knowing h and $\delta$ (e.g., a critical size of a potential object), the probability of occupancy may readily be determined.

In contrast, techniques and systems described herein additionally process radar data, and any other *a priori* data, to determine a probability of occupancy of a cell generated from the radar and other data previously). Further, the number of times lidar system 12 has seen the cell is kept track of. The number of not-seens that would give the occupancy that was determined from the radar data is estimated. Next, the number of seens and not-seens is updated using the current frame of lidar data. From this, a new probability distribution is determined, and then a new probability of occupancy is determined. Thus, the probability of occupancy determined using these techniques is more accurate than the conventional techniques. Some mathematical steps used in the technique are described in detail herein.

An initial fact is as follows. A probability density function ("pdf"), $F_0(x)$, gives the initial assumed probability that the cell is x percent occupied. In a Bayesian statistical approach, after there have been $N_s$ seens and $N_n$ not-seens in the cell, the pdf becomes, up to a normalization, as shown in Equation 2.

$$F(x) = x^{N_s}(1-x)^{N_n} F_0(x) \qquad (2)$$

The expected value of x goes to Equation 1 as the number of measurements gets large. The initial pdf, $F_0(x)$, becomes irrelevant.

An additional fact is as follows. Suppose there is a cell with a cable, as shown in FIG. 5, with cell height H and lidar beam height h. Then, the probability that signal processor 26 detects cable 122 based on data from lidar system 12 is given in Equation 3.

$$\text{probablity that laser detects cable of diameter } \delta = \frac{h+\delta}{H} \qquad (3)$$

Suppose combined navigation system 10 has made many measurements of cell 120. Equation 4 is expected, regardless of the diameter of cable 122.

$$\frac{N_s}{N_s + N_n} > \frac{h}{H} \qquad (4)$$

The pdf is altered slightly if the beamwidth of lidar system 12 is finite. Given x is the percentage of cell 120 that is occupied, and defining y as in Equation 5, the pdf (up to a normalization factor) is given in Equation 6.

$$y = \min\left(x + \frac{h}{H}, 1\right) \qquad (5)$$

$$F(x) = y^{N_s}(1-y)^{N_n} F_0(y) \qquad (6)$$

Given the pdf shown in Equation 6, the probability that cell 120 is occupied (i.e., that there is something within the cell) can be determined. The probability that the percentage of occupancy is greater than a given x is as shown in Equation 7.

$$F(x) = \int_x^1 (x'+h)^{N_s} \left(1-(x'+h)\right)^{N_n} F_0(x'+h)\, dx' \qquad (7)$$

From the cable discussion, the probability that something is in cell 120 is given in Equation 8, as the probability that the percentage of occupancy is greater than $\delta$.

$$F(x) = \int_{\delta}^{1} (x' + h)^{N_s} \left(1 - (x' + h)\right)^{N_n} F_0(x' + h) \, dx' \qquad (8)$$

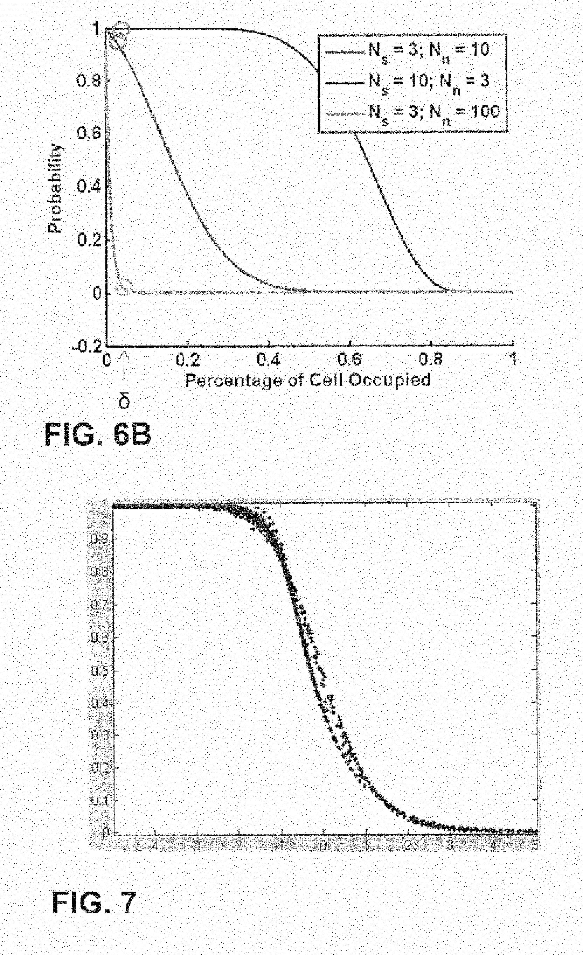

FIGS. 6A and 6B are graphs illustrating example probability distribution functions, in accordance with one or more aspects of the present disclosure. Suppose cell 120, a beamwidth of h = 0.1 (in cell units), $N_s$ seens, and $N_n$ not-seens. Then the pdf may look like that shown in FIG. 6A (for a couple of different $N_s$ and $N_n$). The probability that cell 120 is at least x% occupied is shown in FIG. 6B. In some examples, a processor implanting techniques of the disclosure, such as signal processor 26, may declare cell 120 as occupied (e.g., something is there) if at least $\delta$% of cell 120 is occupied. So a probability, $\phi$, (for the given $\delta$) ranges from small for the case $N_s$ = 3, $N_n$ = 100, to near 1 for the case $N_s$ = 3, $N_n$ = 3.

If $N_s$, $N_n$, h, and $\delta$ are known, then signal processor 26 determines the probability of occupancy. But the following complications may arise. For example, h is range-dependent, although it may be approximated as constant in each cell throughout one frame. Second, keeping track of $N_s$, $N_n$, and h for all cells, and for all frames, may be time-consuming, costly, and ineffective. Further, with the equations so far, there is no way yet to properly fuse lidar data with radar data or *a priori* data.

However, working backwards, h and $\delta$ are known in a given frame. A prior probability of occupancy $\phi$ is known from previous frames of data from radar or lidar or from *a priori* knowledge. If $N_s$ is kept track of, then it is possible to work backwards using $N_s$ at the start of the frame and using the known h and $\delta$ for the frame to obtain an effective $N_n$ that would give the starting probability of occupancy $\phi$. Then the new probability of occupancy may be determined based on h, $\delta$, the new $N_s$, and the new $N_n$ (wherein $N_n$ = the effective $N_n$ plus any new not-seens). Assuming $F_0$ = 1, then the probability that cell 120 is occupied is given in Equation 9.

$$\phi(\delta) = \frac{\int_{\delta}^{1} (x' + h)^{N_s} \left(1 - (x' + h)\right)^{N_n} dx'}{\int_{h}^{1} (x' + h)^{N_s} \left(1 - (x' + h)\right)^{N_n} dx'} \qquad (9)$$

Simplifying, Equation 9 becomes Equation 10.

$$\phi(\delta) = \frac{\int_{\delta+h}^{1} y^{N_s} (1 - y)^{N_n} dy}{\int_{h}^{1} y^{N_s} (1 - y)^{N_n} dy} \qquad (10)$$

Equation 10 is a difficult calculation with no easy approximations. However, if $\phi(\delta)$ is considered in terms of the expected value of the percentage occupied and its standard deviation, the function can be expressed as a function of a single variable. Let $\langle x \rangle$ be the expected value and $\sigma$ be the standard deviation ("std") of $\phi(x)$. Then $\delta'$ is defined as shown in Equation 11.

$$\delta' = \frac{\delta - \langle x \rangle}{\sigma} \qquad (11)$$

FIG. 7 is a graph illustrating one example of a probability distribution function plotted as a function of object height within a cell, in accordance with one or more aspects of the present disclosure. That is, if $\phi$ is plotted as a function of $\delta'$, a nearly universal curve results that is valid for all values of $N_s$, $N_n$, h, and $\delta$. The curve shown in FIG. 7 is essentially the same as the variables are varied as follows: 0 < N < 100, 0.01 < h < 0.5, and 0.01 < $\delta$ < 0.1.

In some examples, this curve may be approximated. For example, a look-up table including points along the curve may be stored in a look-up table. For example, a database containing the look-up table may be stored in storage medium 32 of FIG. 1. Furthermore, the inverse may be approximated, that is, $\delta'$ may be found given $\phi$ as shown in Equation 12.

$$\delta' = p(\phi) \qquad (12)$$

In an example where $\phi$ is stored in a look-up table, $\phi$ may be stored as a 2-byte integer and have a range of 1 to $2^{15}$. As a result, a table built to map $\phi$ to p may have a problem near the ends of the table where the value of $\phi$ is close to zero or one. In these regions, a mapping from $\phi$ will give an absolute value of p that is too small. In turn, a too-small p may provide an effective $N_n$ that is either too small (for p > 0) or too large (for p < 0). This leads to problems with subsequent not-seens having too large an effect (for p > 0). To avoid this potential problem, the values of p for very small $\phi$ are forced to be larger than nominal in the table.

However, an effective $N_n$ still has to be determined given $N_s$ and $\phi$. The universal curve only gives the difference between the expected value, $(x)$, and $\delta$ expressed in units of $\sigma$. $(x)$ and $\sigma$ may be determined from the following calculations.

A sample mean, $\overline{x}$, is given as Equation 13.

$$\overline{x} = \frac{\int_h^1 x'(x' + h)^{N_s} \left(1 - (x' + h)\right)^{N_n} dx'}{\int_h^1 (x' + h)^{N_s} \left(1 - (x' + h)\right)^{N_n} dx'} \qquad (13)$$

Equation 13 may be simplified into Equation 14.

$$\overline{x} = \frac{\int_h^1 (y - h) y^{N_s} (1 - y)^{N_n} dy}{\int_h^1 y^{N_s} (1 - y)^{N_n} dy} \qquad (14)$$

Equation 14 may be further simplified into Equation 15.

$$\overline{x} = \frac{\int_h^1 y^{N_s+1} (1 - y)^{N_n} dy - \int_h^1 h(y^{N_s}) (1 - y)^{N_n} dy}{\int_h^1 y^{N_s} (1 - y)^{N_n} dy} \qquad (15)$$

Equation 15 may be further simplified into Equation 16.

$$\overline{x} = \frac{\int_h^1 y^{N_s+1} (1 - y)^{N_n} dy}{\int_h^1 y^{N_s} (1 - y)^{N_n} dy} - h \qquad (16)$$

Simplifying the numerator of Equation 16 results in Equation 17.

$$\int_h^1 y^{N_s+1} (1 - y)^{N_n} dy$$

$$= -\frac{1}{N_n + 1} y^{N_s+i} (1 - y)^{N_n+1} |_h^1 + \frac{N_s + i}{N_n + 1} \int_h^1 y^{N_s+i-1} (1 - y)^{N_n+1} dy \qquad (17)$$

Subtracting out the (1-y) term from the right side of Equation 17 results in Equation 18.

$$= \frac{1}{N_n + 1} h^{N_s+i}(1-h)^{N_n+1}$$

$$+ \frac{N_s + i}{N_n + 1} \int_h^1 y^{N_s+i-1}(1-y)^{N_n} dy \qquad (18)$$

$$- \frac{N_s + i}{N_n + 1} \int_h^1 y^{N_s+i}(1-y)^{N_n} dy$$

Bringing the last term to the other side results in Equation 19.

$$\frac{N_s + i + N_n + 1}{N_n + 1} \int_h^1 y^{N_s+1}(1-y)^{N_n} dy$$

$$= \frac{1}{N_n + 1} h^{N_s+i}(1-h)^{N_n+1} \qquad (19)$$

$$+ \frac{N_s + i}{N_n + 1} \int_h^1 y^{N_s+i-1}(1-y)^{N_n} dy$$

Setting i = 1, and putting Equation 19 into Equation 16 gives Equation 20.

$$\overline{x} + h$$

$$= \frac{\frac{N_n + 1}{N_s + N_n + 2}\left[\frac{1}{N_n + 1} h^{N_s+1}(1-h)^{N_n+1} + \frac{N_s + 1}{N_n + 1}\int_h^1 y^{N_s}(1-y)^{N_n} dy\right]}{\int_h^1 y^{N_s}(1-y)^{N_n} dy} \qquad (20)$$

Expanding Equation 20 gives Equation 21.

$$\overline{x} + h = \frac{(N_n + 1)}{(N_s + N_n + 2)(N_n + 1)} \frac{h^{N_s+1}(1-h)^{N_n+1}}{\int_h^1 y^{N_s}(1-y)^{N_n} dy}$$

$$+ \frac{(N_n + 1)(N_s + 1)}{(N_s + N_n + 2)(N_n + 1)} \frac{\int_h^1 y^{N_s}(1-y)^{N_n} dy}{\int_h^1 y^{N_s}(1-y)^{N_n} dy} \qquad (21)$$

Cancelling terms from Equation 21 gives Equation 22.

$$\overline{x} + h = \frac{h^{N_s+1}(1-h)^{N_n+1}}{(N_s + N_n + 2)\int_h^1 y^{N_s}(1-y)^{N_n} dy} + \frac{(N_s + 1)}{(N_s + N_n + 2)} \qquad (22)$$

Taking the expected value of $x^2$, using Equation 12 and multiplying both sides by x gives Equation 23.

$$\langle x^2 \rangle = \frac{\int_h^1 (x')^2 (x'+h)^{N_s} \left(1 - (x'+h)\right)^{N_n} dx'}{\int_h^1 (x'+h)^{N_s} \left(1 - (x'+h)\right)^{N_n} dx'} \qquad (23)$$

Substituting Equation 7 into Equation 23 results in Equation 24.

$$\langle x^2 \rangle = \frac{\int_h^1 y^{N_s} (y-h)^2 (1-y)^{N_n} dy}{\int_h^1 y^{N_s} (1-y)^{N_n} dy} \qquad (24)$$

Expanding the $(y - h)^2$ term in Equation 24 gives Equation 25

$$\langle x^2 \rangle = \frac{\int_h^1 y^{N_s+2} (1-y)^{N_n} dy}{\int_h^1 y^{N_s} (1-y)^{N_n} dy} - 2h \frac{\int_h^1 y^{N_s+1} (1-y)^{N_n} dy}{\int_h^1 y^{N_s} (1-y)^{N_n} dy} + h^2 \qquad (25)$$

Substituting Equation 16 into the second term of Equation 25 results in Equation 26

$$\langle x^2 \rangle = \frac{\int_h^1 y^{N_s+2} (1-y)^{N_n} dy}{\int_h^1 y^{N_s} (1-y)^{N_n} dy} - 2h(\bar{x} + h) + h^2 \qquad (26)$$

Integrating by parts of Equation 26 results in Equation 27.

$$\langle x^2 \rangle = \frac{h^{N_s+2}(1-h)^{N_n+1}}{(N_s + N_n + 3) \int_h^1 y^{N_s} (1-y)^{N_n} dy}$$
$$+ \frac{N_s + 2}{N_s + N_n + 3} \frac{\int_h^1 y^{N_s+1} (1-y)^{N_n} dy}{\int_h^1 y^{N_s} (1-y)^{N_n} dy} - 2h(\bar{x} + h) + h^2 \qquad (27)$$

Substituting Equation 16 into the second term of Equation 27 and simplifying gives Equation 28.

$$\langle x^2 \rangle = \frac{h^{N_s+2}(1-h)^{N_n+1}}{(N_s + N_n + 3) \int_h^1 y^{N_s} (1-y)^{N_n} dy} + \frac{N_s + 2}{N_s + N_n + 3}(\bar{x} + h) - 2h\bar{x}$$
$$- h^2 \qquad (28)$$

The variance is given in Equation 29.

$$\sigma^2 = \langle x^2 \rangle - \bar{x}^2 \qquad (29)$$

Substituting Equation 28 into Equation 29 and factoring provides Equation 30.

$$\sigma^2 = \frac{h^{N_s+2}(1-h)^{N_n+1}}{(N_s+N_n+3)\int_h^1 y^{N_s}(1-y)^{N_n}\,dy} + \frac{N_s+2}{N_s+N_n+3}(\bar{x}+h)$$
$$- (\bar{x}+h)^2 \qquad (30)$$

In the first term of Equation 30, pulling out an h and multiplying by $\frac{(N_s+N_n+2)}{(N_s+N_n+2)}$ provides Equation 31.

$$\sigma^2 = \frac{h(N_s+N_n+2)}{(N_s+N_n+3)}\frac{h^{N_s+1}(1-h)^{N_n+1}}{(N_s+N_n+2)\int_h^1 y^{N_s}(1-y)^{N_n}\,dy}$$
$$+ \frac{N_s+2}{N_s+N_n+3}(\bar{x}+h) - (\bar{x}+h)^2 \qquad (31)$$

Substituting Equation 22 into the first term of Equation 31 results in Equation 32.

$$\sigma^2 = \frac{h(N_s+N_n+2)}{(N_s+N_n+3)}\left[\bar{x}+h-\frac{(N_s+1)}{(N_s+N_n+2)}\right] + \frac{N_s+2}{N_s+N_n+3}(\bar{x}+h)$$
$$- (\bar{x}+h)^2 \qquad (32)$$

Approximating Equation 32 and factoring provides Equation 33.

$$\sigma^2 \approx h\left[\bar{x}+h-\frac{(N_s+2)}{(N_s+N_n+3)}\right] + (\bar{x}+h)\left[\frac{N_s+2}{N_s+N_n+3}-(\bar{x}+h)\right] \qquad (33)$$

Further simplifying of Equation 33 results in Equation 34.

$$\sigma^2 \approx \left[\frac{N_s+2}{N_s+N_n+3}-(\bar{x}+h)\right]\bar{x} \qquad (34)$$

Substituting Equation 11 into Equation 12 and squaring both sides results in Equation 35.

$$(\delta-\bar{x})^2 = p(\phi)^2\sigma^2 \qquad (35)$$

Substituting Equation 34 into Equation 35 results in Equation 36.

$$\delta^2 - 2\delta\bar{x} + \bar{x}^2 = p(\phi)^2\left[\frac{N_s+2}{N_s+N_n+3}-(\bar{x}+h)\right]\bar{x} \qquad (36)$$

Simplifying Equation 36 results in Equation 37.

$$\delta^2 - 2\delta\bar{x} + \bar{x}^2 = p(\phi)^2 \left[ \left( \frac{N_s + 2}{N_s + N_n + 3} - h \right) \bar{x} - \bar{x}^2 \right] \qquad (37)$$

Further simplifying Equation 37 results in Equation 38.

$$0 = (1 + p(\phi)^2)\bar{x}^2 - \left( 2\delta + p(\phi)^2 \left( \frac{N_s + 2}{N_s + N_n + 3} - h \right) \right) \bar{x} + \delta^2 \qquad (38)$$

Now, the task is to solve for $N_n$ given $N_s$, p, and h. A working approximation to the real solution is as follows. The coefficients $b_0$ and $b_1$ are defined as follows in Equation 39 and Equation 40.

$$b_0 = \frac{1 - (h + \delta)}{\delta} + N_s \frac{1 - (h + \delta)}{h + \delta} \qquad (39)$$

$$b_1 = \frac{1 - h}{\sqrt{(1 - h - \delta)(N_s + 1 + \delta - h)}} \qquad (40)$$

Equation 41 defines $N_n$ under different conditions of p. If p > 0.0, then

$$N_n = -1 + b_0[1 + p(\phi)b_1]$$

Else, if p < 0.0, then

$$\qquad (41)$$

$$N_n = -1 + \frac{b_0}{1 - p(\phi)b_1}$$

The approximation of Equation 41 is relatively easy to determine for $N_n$ and is also relatively easy to invert. $N_n$ or p may be solved for with relative ease and Equation 41 also preserves features of the examples described herein.

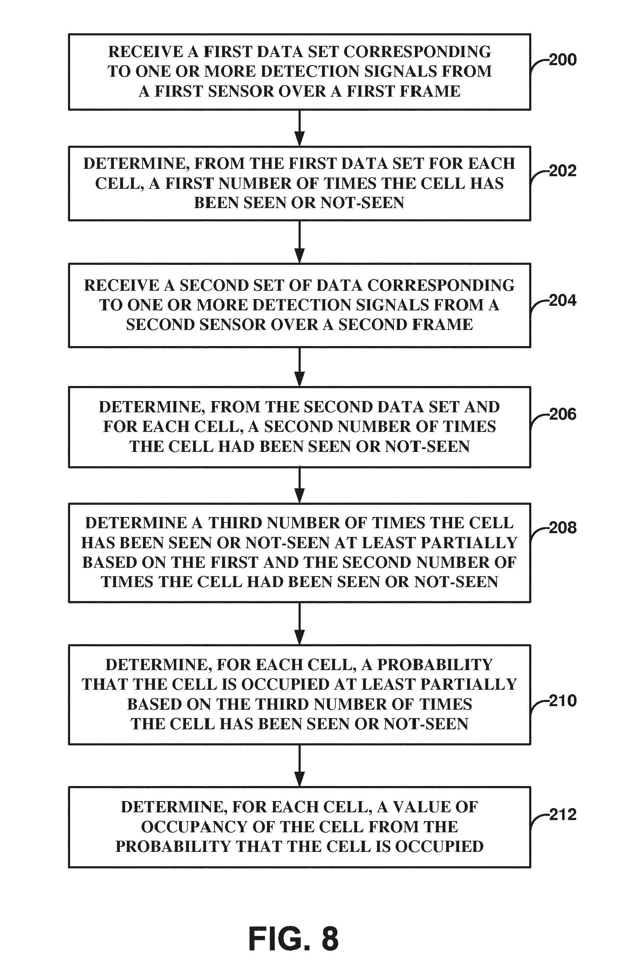

FIG. 8 is a flowchart illustrating an example method of determining probability of occupancy of a cell using two types of sensor data, in accordance with one or more aspects of the present disclosure. As discussed herein, the method is described with respect to combined navigation system 10 of FIG. 1. However, the method may apply to other example navigation systems as well.

The method of FIG. 8 provides a calculation that can be used to identify a probability threshold level of cell occupation that indicates the cell is dangerous if its percentage is above the threshold, and probably not dangerous if the percentage the cell is occupied is below the threshold. For example, the probability of occupancy of a cell determined from radar and other previously gathered data is determined. A number of times the lidar system has seen the cell is recorded. A number of times the cell would have to be not-seen is estimated that would result in the probability of occupancy determined from the radar data. The number of times the cell is seen and not-seen is determined using a current frame of lidar data, and determined from a new probability distribution, resulting in a new probability of occupancy for the cell.

The method of FIG. 8 includes a processor, such as signal processor 26 of FIG. 1, receiving a first data set corresponding to one or more detection signals from a first sensor over a first frame (200). The first frame may correspond to an observation of a spatial region over a first time period. The spatial region may be is mathematically broken into one or more cells, as is shown in FIGS. 4B and 4C. The cells may be disjoint, i.e., the cells do not overlap in space. The first sensor may be a lidar sensor, such as, for example, lidar system 12 of FIG. 1. The method may further include determining, from the first data set for each cell, a first number of times the cell has been seen or not-seen (202). Thus, for each cell in the frame, the number of times the cell has been seen and not-seen is determined.

The method may further include receiving a second set of data corresponding to one or more detection signals from a second sensor over a second frame (204). The second frame may correspond to an observation of the spatial region over a second time period. In some examples, the second time period precedes the first time period. The second sensor may have a resolution different than the first sensor. For example, the resolution of the second sensor may be much less than the resolution of the first sensor. In some examples, the second sensor is a radar sensor, such as, for example, radar system 20 of FIG. 1.

From the second data set and for each cell, the method may determine a second number of times the cell had been seen or not-seen (206). In some examples, the second number of times the cell had been seen or not-seen may further be determined based on a prior data, such as stored map data.

In some examples, the method further includes determining an expected value, (x), from a current probability of occupancy of the cell, p. In some examples, the expected value (x) may be normalized to a standard deviation, $\sigma$. The expected value (x) may be determined based on a current probability of occupancy for the cell, p. This may be achieved using a look-up table that includes several values for the p plotted as shown in FIG. 7. That is, a probability that the cell is occupied may be determined at least partially based on the first number of times the cell has been seen or not-seen.

The method may further include determining a third number of times the cell has been seen or not-seen at least partially based on the first and the second number of times the cell had been seen or not-seen (208). In some examples, determining the third number of times the cell had been seen or not-seen is determined by adding the times the cell is seen and not-seen in this frame to the number of times it is seen and not-seen prior to this frame.

In some examples, the third number of times the cell has been seen or not-seen may be further based on a fourth number of times the cell has been seen or not-seen. The method may include determining, for each cell, a height of the one or more detection signals from the first sensor, h, and a height of an object within the cell, $\delta$, at least partially based on a beamwidth of the one or more detection signals, a range from the first sensor to the cell, and a height of the cell. In some examples, the height of the one or more detection signals and the height of the object within the cell are further determined based on a threshold percentage of the cell that is occupied before the cell is labeled occupied. The fourth number of times the cell has been seen or not-seen may be determined based on h and $\delta$. In other words, h and $\delta$ may be determined based on the ratio of the beamwidth times range to the cell height, and the percentage of the cell that must be occupied in order to call the cell "occupied". Using h and $\delta$, and the number of times that the cell was seen prior to this frame, an effective number of times that the cell was not-seen prior to this frame can be determined using Eqs. 39-41. In other words, an effective number of times the cell was not-seen prior to the first frame may be determined based at least partially on the second probability that the cell is occupied, the height of the one or more detection signals, and the height of the object within the cell.

The method of FIG. 8 may further include determining, for each cell, a probability that the cell is occupied at least partially based on the third number of times the cell has been seen or not-seen (210). In other words, a new value of p may be determined based on the third number of times the cell has been seen or not-seen from Equations 39-41.

The method of FIG. 8 may further include determining, for each cell, a value of occupancy of the cell from the probability that the cell is occupied (212). That is, a new value of occupancy may be determined from the new value of p. The new value of occupancy may be determined or determined from a look-up table as shown in FIG. 7.

In some examples, the method of FIG. 8 may further include creating a single evidence grid corresponding to the one or more cells and indicating, for each cell in the evidence grid, that the cell is occupied when the value of occupancy of the cell is greater than or equal to a probability threshold level of cell occupation. That is, processor 26 may plot information from both the first and second data sets directly into a single evidence grid. Thus, processor 26 does not have to first create separate evidence grids for the first and second data sets before creating a combined evidence grid.

In some examples, the method further comprising generating data corresponding to a three dimensional map of the spatial region based at least partially on the probability that each cell is occupied. For example, 3D mapping engine 36 of navigation computer 30 generates data that may be used to render an output of a 3D map. 3D mapping engine 36 may provide this data to 3D map rendering engine 50 of flight computer 40, which may render data for a 3D map output. 3D map rendering engine 50 may output the data to display device 54 for output of a 3D map (which may be displayed in 2D).

In some examples, the three dimensional map of the spatial region indicates the cell is occupied when the value of occupancy of the cell is greater than or equal to a probability threshold level of cell occupation and indicates the cell is not occupied when the value of occupancy of the cell is less than the probability threshold level. Thus, the probability that there is something in the cell that is larger than the cable diameter, which is a size potentially dangerous to an aerial vehicle, is displayed.

In sum, the probability that there is something in a cell that is larger than a threshold dangerous occupancy level is determined from a probability distribution function. For example, with respect to a cable in a spatial region, the cable diameter, $\delta$, is a critical percentage of cell occupancy that is of concern. Once the probability that the cell is occupied is known, it can be combined with radar data. This can be framed such as if it were generated by a plurality of lidar measurements taken from the particular location, because the probability of occupancy and the lidar beam height at this location are known. If the total number of lidar samples is kept track of, it may be possible to work backwards to determine an effective number of times that the lidar would have not-seen the cell given the number of times it has already seen the cell. This frames the radar data in terms of lidar data (resulting in "pseudo lidar data"). Once that is done, the lidar data may be added to the pseudo-lidar data. A new probability distribution may be determined based on the number of seens and not-seens that are generated in this frame of data. A new probability of occupancy may be determined from the new probability distribution.

Thus, techniques, devices, and systems described herein combine remote ranging sensor data having disparate resolutions in a mathematically correct way. 3D maps may be generated based on the combined data. The techniques, devices, and systems described herein may have improved accuracy and combine advantages from two or more different types of remote ranging sensors.

The term "about," "approximate," or the like indicates that the value listed may be somewhat altered, as long as the alteration does not result in nonconformance of the process or structure to the illustrated example.

The techniques of this disclosure may be implemented in a wide variety of computer devices. Any components, modules or units have been described provided to emphasize functional aspects and does not necessarily require realization by different hardware units. The techniques described herein may also be implemented in hardware, software, firmware, or any combination thereof.

If implemented in software, the functions may be stored on or transmitted over, as one or more instructions or code, a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to tangible computer-readable storage media which is non-transitory. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transient media, but are instead directed to non-transient, tangible storage media. Combinations of the above should also be included within the scope of computer-readable media.

Instructions may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, the functionality described herein may be provided within dedicated hardware and/or software modules configured for performing the techniques of this disclosure. In any such cases, the computers described herein may define a specific machine that is capable of executing the specific functions described herein. Also, the techniques could be fully implemented in one or more circuits or logic elements, which could also be considered a processor.

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a codec hardware unit or provided by a collection of interoperative hardware units, including one or more processors as described above, in conjunction with suitable software and/or firmware.

Various aspects of the disclosure have been described. Aspects or features of examples described herein may be combined with any other aspect or feature described in another example. These and other examples are within the scope of the following claims.

**Claims**

1. A method comprising:

   receiving, by one or more processors, a first data set corresponding to one or more detection signals from a first sensing system over a first frame, wherein the first frame corresponds to an observation of a spatial region by the first sensing system over a first time period, and wherein the spatial region is mathematically broken into one or more cells;

   for each cell, determining, by the one or more processors, from the first data set, a first number of times the cell has been seen or not-seen by the first sensing system;

   receiving, by the one or more processors, a second set of data corresponding to one or more detection signals from a second sensing system over a second frame, wherein the second frame corresponds to an observation of the spatial region by the second sensing system over a second time period and wherein the second sensing system has a resolution different than the first sensing system;

   for each cell, determining, by the one or more processors, from the second data set, a second number of times the cell had been seen or not-seen by the second sensing system;

   determining, by the one or more processors, a third number of times the cell has been seen or not-seen at least partially based on the first and the second number of times the cell had been seen or not-seen;

   determining, by the one or more processors, for each cell, a probability that the cell is occupied at least partially based on the third number of times the cell has been seen or not-seen; and

   determining, by the one or more processors and for each cell, a value of occupancy of the cell from the probability that the cell is occupied.

2. The method of claim 1, further comprising:

   creating a single evidence grid corresponding to the one or more cells; and

   indicating, for each cell in the evidence grid, that the cell is occupied when the value of occupancy of the cell is greater than or equal to a probability threshold level of cell occupation.

3. The method of claim 1, wherein the second time period precedes the first time period.

4. The method of claim 1, further comprising:

   determining, by the one or more processors, for each cell, a height of the one or more detection signals from the first sensing system at least partially based on a beamwidth of the one or more detection signals, a range from the first sensing system to the cell, and a height of the cell; and

   determining, by the one or more processors, for each cell, a height of an object within the cell at least partially based on the beamwidth of the one or more detection signals from the first sensing system, the range from the first sensing system to the cell, and the height of the cell; and

   determining, by the one or more processors, a fourth number of times the cell has been seen or not-seen based on the height of the one or more detection signals from the first sensing system and the height of an object within the cell.

5. The method of claim 1, wherein determining, for each cell, the probability that the cell is occupied comprises determining the probability at least partially based on the following equations:

$$b_0 = \frac{1-(h+\delta)}{\delta} + N_s \frac{1-(h+\delta)}{h+\delta}$$

$$b_1 = \frac{1-h}{\sqrt{(1-h-\delta)(N_s+1+\delta-h)}}$$

if $p > 0.0$, then

$$N_n = -1 + b_0[1 + p(\phi)b_1]$$

else, if $p < 0.0$, then

$$N_n = -1 + \frac{b_0}{1-p(\phi)b_1},$$

wherein a height of the one or more detection signals is given as h, a height of an object within the cell is given as $\delta$, the third number of times the cell is seen is given as $N_s$, and the probability that a cell is occupied is given as p.

6. A system comprising:

a first sensing system configured to determine a first data set corresponding to one or more received reflected signals having a first beamwidth over a first frame, wherein the first frame corresponds to an observation of a spatial region over a first time period by the lidar system, and wherein the spatial region is mathematically broken into one or more cells;
a second sensing system configured to determine a second data set corresponding to one or more received reflected signals having a second beamwidth over a second frame, wherein the second frame corresponds to an observation of the spatial region over a second time period and wherein the second beamwidth is larger than the first beamwidth; and
one or more signal processors communicatively coupled to the lidar system and the radar system, wherein the one or more signal processors are configured to:

determine, from the first data set for each cell, a first number of times the cell has been seen or not-seen by the first sensing system;
determine, from the second data set and for each cell, a second number of times the cell had been seen or not-seen by the second sensing system;
determine a third number of times the cell has been seen or not-seen at least partially based on the first and the second number of times the cell had been seen or not-seen;
determine, for each cell, a probability that the cell is occupied at least partially based on the third number of times the cell has been seen or not-seen; and
determine, for each cell, a value of occupancy of the cell from the probability that the cell is occupied.

7. The system of claim 6, wherein the one or more signal processors are further configured to:

determine, for each cell, a height of the one or more detection signals and a height of an object within the cell at least partially based on a beamwidth of the one or more detection signals, a range from the first sensing system to the cell, a height of the cell, and a threshold percentage of the cell that is occupied before the cell is labeled occupied;
determine a fourth number of times the cell has been seen or not-seen based on the height of the one or more detection signals and the height of an object within the cell;
create a single evidence grid corresponding to the one or more cells; and
indicate, for each cell in the evidence grid, that the cell is occupied when the value of occupancy of the cell is greater than or equal to a probability threshold level of cell occupation.

8. The system of claim 6, wherein the probability that the cell is occupied is a first probability that the cell is occupied, the system further comprising:

a storage medium accessible by the one or more signal processors that includes a look-up table that includes one or more values of a function of the probability that the cell is occupied based on the number of times the cell was not-seen, and

wherein the one or more signal processors are further configured to determine, for each cell, a second probability that the cell is occupied based at least partially on the first number of times the cell has been seen or not-seen.

9. The system of claim 6, wherein the first sensing system is a lidar system and the second sensing system is a radar system, wherein the one or more signal processors are configured to determine, for each cell, the probability that the cell is occupied is at least partially is further based on the following equations:

$$b_0 = \frac{1-(h+\delta)}{\delta} + N_s \frac{1-(h+\delta)}{h+\delta}$$

$$b_1 = \frac{1-h}{\sqrt{(1-h-\delta)(N_s+1+\delta-h)}}$$

if $p > 0.0$, then

$$N_n = -1 + b_0[1 + p(\phi)b_1]$$

else, if $p < 0.0$, then

$$N_n = -1 + \frac{b_0}{1-p(\phi)b_1},$$

wherein a height of the one or more detection signals is given as h, a height of an object within the cell is given as $\delta$, the third number of times the cell is seen is given as $N_s$, and the probability that a cell is occupied is given as p.

10. The system of claim 6, wherein the one or more processors are further configured to generate data corresponding to a three dimensional map of the spatial region based at least partially on the probability that each cell is occupied, the navigation device further comprising:

a display device configured to output the data corresponding to the three dimensional map.

EP 2 891 899 A1

**FIG. 1**

**FIG. 2A**

EP 2 891 899 A1

**FIG. 2B**

EP 2 891 899 A1

**FIG. 3A**

EP 2 891 899 A1

EP 2 891 899 A1

**FIG. 3B**

FIG. 4A

EP 2 891 899 A1

**FIG. 4B**

**FIG. 4C**

**FIG. 5**

**FIG. 6A**

FIG. 6B

FIG. 7

RECEIVE A FIRST DATA SET CORRESPONDING TO ONE OR MORE DETECTION SIGNALS FROM A FIRST SENSOR OVER A FIRST FRAME ⟋200

DETERMINE, FROM THE FIRST DATA SET FOR EACH CELL, A FIRST NUMBER OF TIMES THE CELL HAS BEEN SEEN OR NOT-SEEN ⟋202

RECEIVE A SECOND SET OF DATA CORRESPONDING TO ONE OR MORE DETECTION SIGNALS FROM A SECOND SENSOR OVER A SECOND FRAME ⟋204

DETERMINE, FROM THE SECOND DATA SET AND FOR EACH CELL, A SECOND NUMBER OF TIMES THE CELL HAD BEEN SEEN OR NOT-SEEN ⟋206

DETERMINE A THIRD NUMBER OF TIMES THE CELL HAS BEEN SEEN OR NOT-SEEN AT LEAST PARTIALLY BASED ON THE FIRST AND THE SECOND NUMBER OF TIMES THE CELL HAD BEEN SEEN OR NOT-SEEN ⟋208

DETERMINE, FOR EACH CELL, A PROBABILITY THAT THE CELL IS OCCUPIED AT LEAST PARTIALLY BASED ON THE THIRD NUMBER OF TIMES THE CELL HAS BEEN SEEN OR NOT-SEEN ⟋210

DETERMINE, FOR EACH CELL, A VALUE OF OCCUPANCY OF THE CELL FROM THE PROBABILITY THAT THE CELL IS OCCUPIED ⟋212

FIG. 8

Europäisches
Patentamt

European
Patent Office

Office européen
des brevets

**EUROPEAN SEARCH REPORT**

Application Number

EP 14 18 9287

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/125680 A1 (THACKRAY ROBERT G [US] THACKRAY ROBERT GEORGE [US]) 15 June 2006 (2006-06-15) | 1-3,6,8 | INV. G01S13/86 G01S13/93 |
| A | * abstract; claim 22; figures 1-8 * * paragraphs [0003], [0012], [0014], [0033], [0035] - [0041], [0044] - [0048] * | 4,5,7 | G01S17/93 G01S7/295 G01S17/89 G01S13/89 G01S5/02 |
| A | US 2010/066587 A1 (YAMAUCHI BRIAN MASAO [US] ET AL) 18 March 2010 (2010-03-18) * abstract * * paragraphs [0049] - [0054], [0067], [0082], [0085] * | 1-10 | |
| A | US 2009/238473 A1 (MCKITTERICK JOHN B [US]) 24 September 2009 (2009-09-24) * abstract; figures 1-6 * * paragraphs [0004] - [0006], [0014] - [0021], [0032] - [0033] * | 1-10 | |
| A | EP 2 573 582 A1 (HONEYWELL INT INC [US]) 27 March 2013 (2013-03-27) * abstract; figures 1,2 * * paragraphs [0008] - [0012] * | 1-10 | **TECHNICAL FIELDS SEARCHED (IPC)** G01S |
| A | US 2010/271255 A1 (MCKITTERICK JOHN B [US]) 28 October 2010 (2010-10-28) * abstract * | 1-10 | |
| A | EP 2 463 680 A2 (HONEYWELL INT INC [US]) 13 June 2012 (2012-06-13) * abstract; claim 1; figure 1 * * paragraphs [0013] - [0015] * | 1-10 | |

The present search report has been drawn up for all claims

| Place of search | Date of completion of the search | Examiner |
|---|---|---|
| Munich | 28 May 2015 | Mercier, Francois |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 14 18 9287

This annex lists the patent family members relating to the patent documents cited in the above-mentioned European search report.
The members are as contained in the European Patent Office EDP file on
The European Patent Office is in no way liable for these particulars which are merely given for the purpose of information.

28-05-2015

| Patent document cited in search report | | Publication date | Patent family member(s) | | Publication date |
|---|---|---|---|---|---|
| US 2006125680 | A1 | 15-06-2006 | EP<br>US | 1672390 A1<br>2006125680 A1 | 21-06-2006<br>15-06-2006 |
| US 2010066587 | A1 | 18-03-2010 | NONE | | |
| US 2009238473 | A1 | 24-09-2009 | EP<br>US | 2103957 A1<br>2009238473 A1 | 23-09-2009<br>24-09-2009 |
| EP 2573582 | A1 | 27-03-2013 | CN<br>EP<br>US | 103065036 A<br>2573582 A1<br>2013080050 A1 | 24-04-2013<br>27-03-2013<br>28-03-2013 |
| US 2010271255 | A1 | 28-10-2010 | CN<br>EP<br>JP<br>US | 102338868 A<br>2397866 A1<br>2012002809 A<br>2010271255 A1 | 01-02-2012<br>21-12-2011<br>05-01-2012<br>28-10-2010 |
| EP 2463680 | A2 | 13-06-2012 | EP<br>US | 2463680 A2<br>2012150441 A1 | 13-06-2012<br>14-06-2012 |

EPO FORM P0459

For more details about this annex : see Official Journal of the European Patent Office, No. 12/82